(19) **Europäisches Patentamt / European Patent Office / Office européen des brevets**

(11) **EP 4 611 245 A1**

(12) **EUROPEAN PATENT APPLICATION**
published in accordance with Art. 153(4) EPC

(43) Date of publication:
**03.09.2025 Bulletin 2025/36**

(21) Application number: **23911508.2**

(22) Date of filing: **29.11.2023**

(51) International Patent Classification (IPC):
***H02M 7/48*** (2007.01)   ***H02M 1/12*** (2006.01)

(52) Cooperative Patent Classification (CPC):
**H02M 1/12; H02M 3/00; H02M 7/48**

(86) International application number:
**PCT/JP2023/042651**

(87) International publication number:
**WO 2024/142727 (04.07.2024 Gazette 2024/27)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **28.12.2022 JP 2022211558**

(71) Applicant: **OMRON Corporation
Kyoto 600-8530 (JP)**

(72) Inventor: **UEMATSU, Takeshi
Kyoto-shi, Kyoto 600-8530 (JP)**

(74) Representative: **Isarpatent
Patent- und Rechtsanwälte
Barth Hassa Peckmann & Partner mbB
Friedrichstraße 31
80801 München (DE)**

(54) **SWITCHING POWER SUPPLY DEVICE AND CONTROL DEVICE**

(57)    A switching power supply device includes: a switching circuit configured to transform an input power by switching according to a pulse drive signal; a smoothing circuit in which a condenser in parallel is disposed at least on an output side of the switching circuit; and a control device configured to generate a pulse drive signal so that the output voltage of the smoothing circuit is a predetermined output target voltage. The control device includes a voltage compensator configured to generate a control value for reducing a difference between the output voltage and the output target voltage and thus changing a duty ratio of the pulse drive signal, a current compensator configured to correct the control value based on a detected current at a predetermined section of the smoothing circuit, and a virtual capacitance configured to calculate, from the output voltage, a current correction amount based on virtual capacitance generated by a virtual parallel element parallel to the condenser and correct the control value to be input to the current compensator.

FIG. 2

**Description**

TECHNICAL FIELD

The present invention relates to a switching power supply device and a control device.

BACKGROUND OF INVENTION

In recent years, various types of switching power supplies have been proposed (see, for example, Patent Documents 1 to 3 and Non-patent Document 1).

CITATION LIST

PATENT LITERATURE

    Patent Document 1: JP 2011-254645 A
    Patent Document 2: JP 2017-200419 A
    Patent Document 3: JP 2022-91189 A

NON-PATENT LITERATURE

Non-patent Document 1: Masashi Yokoo, Keiichiro Kondo, "A Method to Design a Damping Control System for a Field Oriented Controlled Induction Motor Traction System for DC Electric Railway Vehicles", IEEJ Transactions on Electrical and Electronic Engineering, The Institute of Electrical Engineers of Japan, June 1, 2015, Vol. 135, No. 6, pp. 622-631

SUMMARY

TECHNICAL PROBLEM

In order to achieve miniaturization and high efficiency of a switching power supply device, one possible approach is to adopt small and low-loss components in the circuit design. However, using such components for the smoothing circuit of a switching power supply device may lower damping capacity, making the output voltage waveform oscillatory, for example, during load fluctuations.

In response to this, the present application discloses a technology capable of stabilizing the output voltage of the switching power supply device.

SOLUTION TO PROBLEM

To solve the above problem, an embodiment of the present invention calculates, from an output voltage, a current correction amount based on virtual capacitance generated by a virtual parallel element when provided in the smoothing circuit and corrects a control value for adjusting a duty ratio of a pulse drive signal.

Particularly, an embodiment of the present invention is a switching power supply device and includes: a switching circuit configured to transform an input power by switching according to a pulse drive signal; a smoothing circuit in which a condenser in parallel is disposed at least on an output side of the switching circuit; and a control device configured to generate a pulse drive signal so that the output voltage of the smoothing circuit is a predetermined output target voltage. The control device includes a voltage compensator configured to generate a control value for reducing a difference between the output voltage and the output target voltage and thus changing a duty ratio of the pulse drive signal, a current compensator configured to correct the control value based on a detected current at a predetermined section of the smoothing circuit, and a virtual capacitance configured to calculate, from the output voltage, a current correction amount based on virtual capacitance generated by a virtual parallel element parallel to the condenser and correct the control value to be input to the current compensator.

Such a switching power supply device allows the control value for changing the duty ratio of the pulse drive signal to be corrected to include the virtual capacitance generated by the virtual parallel element that does not exist in the smoothing circuit. Thus, even adopting a small and low-loss condenser caused to exist in the smoothing circuit can stabilize the output voltage without lowering the damping capacity.

The virtual parallel element may include a virtual condenser and a virtual resistor that are parallel to the condenser. Calculating the current correction amount based on the virtual capacitance generated by such a virtual parallel element from the output voltage and correcting the control value to be input to the current compensator can stabilize the output voltage.

A virtual admittance to be used for correcting the control value by the virtual capacitance may include a filter configured to reduce a gain in a high frequency range. When such a filter is included, the control value can be corrected appropriately.

The smoothing circuit may include an inductor connected to the switching circuit, and the control device may further include a virtual inductance configured to: calculate, from the detected current, a voltage correction amount based on a virtual inductance generated by a virtual series element in series with the inductor; and correct the output target voltage to be input to the voltage compensator. Such a switching power supply device allows the control value for changing the duty ratio of the pulse drive signal to be corrected to include the virtual inductance generated by the virtual series element that does not exist in the smoothing circuit. Thus, even adopting a small and low-loss inductor that exists in the smoothing circuit is small and low-loss can stabilize the output voltage without lowering the damping capacity.

The virtual series element may include a virtual inductor and a virtual resistor that are in series with the inductor. Calculating the voltage correction amount based on the virtual inductance generated by such a virtual parallel element from the output voltage and correcting the output target value to be input to the voltage compensator can stabilize the output voltage.

The virtual impedance used by the virtual inductance that corrects the control value may include a filter that reduces a gain in a high frequency range. When such a filter is included, the control value can be corrected appropriately.

The current compensator may correct the control value based on the detected current averaged by a filter that averages the current. Such a current compensator improves resistance to the noise of the detected current.

The switching circuit and the smoothing circuit may form a single-phase or three-phase inverter circuit. The switching power supply device in which the switching circuit and the smoothing circuit form such an inverter circuit can stabilize the output voltage output to the load.

An embodiment of the present invention can also be understood from the aspect of a control device for a switching power supply device. An embodiment of the present invention may be a control device for a switching power supply device including, for example, a switching circuit configured to transform an input power by switching according to a pulse drive signal and a smoothing circuit in which an inductor in series and a condenser in parallel are disposed at least on an output side of the switching circuit.

The control device includes a controller configured to generate a pulse drive signal so that the output voltage of the smoothing circuit is a predetermined output target voltage.

The controller includes a voltage compensator configured to generate a control value for reducing a difference between the output voltage and the output target voltage and thus changing a duty ratio of the pulse drive signal, a current compensator configured to correct the control value based on a detected current at a predetermined section of the smoothing circuit, and a virtual capacitance configured to calculate, from the output voltage, a current correction amount based on virtual capacitance generated by a virtual parallel element parallel to the condenser and correct the control value to be input to the current compensator.

## ADVANTAGEOUS EFFECTS OF INVENTION

The above switching power supply device and the control device can stabilize the output voltage of the switching power supply device.

## BRIEF DESCRIPTION OF THE DRAWINGS

FIG. 1 is an image diagram of a circuit configuration implemented in a switching power supply device according to an application example.
FIG. 2 is a block diagram of a control system of a switching power supply device.
FIG. 3 is a circuit configuration diagram of a three-phase inverter.
FIG. 4 is a general plant model after dq conversion in the three-phase inverter.
FIG. 5 is a plant model when a load is applied to the three-phase inverter.
FIG. 6 is a diagram illustrating a small signal model of the d-axis in the three-phase inverter.
FIG. 7 is a block diagram of a control system incorporating a virtual capacitance from the embodiment into a basic current mode control configuration.
FIG. 8 is a diagram illustrating a verification result in a three-phase inverter.

FIG. 9 is a diagram illustrating a verification result in a single-phase inverter.

DESCRIPTION OF EMBODIMENTS

Application Example

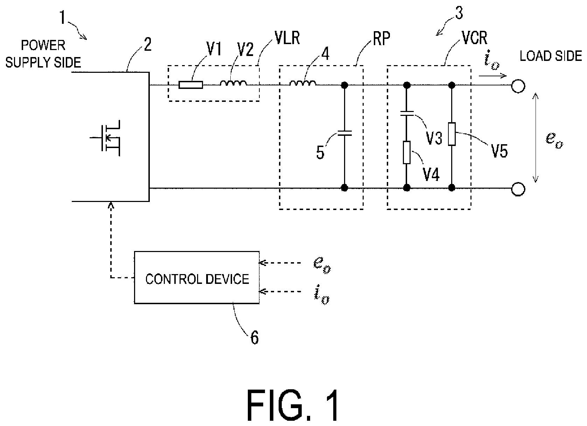

FIG. 1 is an image diagram of a circuit configuration implemented in a switching power supply device according to an application example. A switching power supply device 1 according to the present application example is a converter provided with a switching circuit 2, a smoothing circuit 3 and a control device 6, and converts the voltage of the input power of the switching power supply device 1 and outputs the converted voltage. The switching circuit 2 transforms the input power by switching according to the pulse drive signal generated by the control device 6. The smoothing circuit 3 includes a series inductor 4 and a parallel condenser 5 arranged on the output side of the switching circuit 2. These components smooth the output current of the switching circuit 2, thereby removing harmonic components, or the like.

In the switching power supply device of the present application example, a virtual resistor V1, virtual inductor V2, virtual condenser V3, virtual ESRV4 (ESR: equivalent series resistor), and virtual dummy resistor V5 are virtually formed by the arithmetic processing in the control device 6, as illustrated in FIG. 1. While the inductor 4 and condenser 5 are elements of real components, the virtual resistor V1, virtual inductor V2, virtual condenser V3, virtual ESRV4, and virtual dummy resistor V5 are not elements of real components. The virtual resistor V1, virtual inductor V2, virtual condenser V3, and virtual ESRV4 are elements that are virtually achieved by the arithmetic processing in the control device 6, which controls the switching of the switching circuit 2. Thus, to facilitate the distinction between real components and non-real components, in FIG. 1, a site composed of the inductor 4 and condenser 5 is defined as real component RP, a site composed of the virtual resistor V1 and virtual inductor V2 is defined as virtual inductance VLR, and a site composed of virtual condenser V3, virtual ESRV4, and virtual dummy resistor V5 is defined as virtual capacitance VCR.

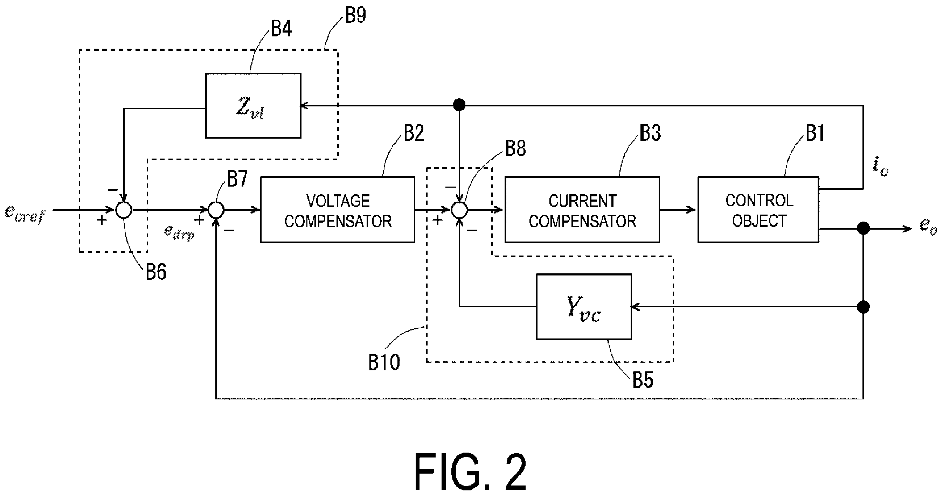

FIG. 2 is a block diagram of the control system of the switching power supply device 1. The block diagram illustrated in FIG. 2 is achieved by the control operation of the control device 6. A control object B1 represents the entirety of the switching circuit 2 and the smoothing circuit 3. The control device 6 generates the pulse drive signal of the switching circuit 2 so that the output voltage of the switching power supply device 1 becomes the predetermined output target voltage. In the control system of the switching power supply device 1, the current mode control is achieved by using the current flowing through the smoothing circuit 3.

Furthermore, the control system of the switching power supply device 1 includes a virtual inductance B9 for achieving the virtual inductance VLR illustrated in FIG. 1. The virtual inductance B9 includes a filter B4 and a subtractor B6. The control system of the switching power supply device 1 includes such a virtual inductance B9. Thus, even though the virtual inductance VLR (derived from the virtual resistor V1 and the virtual inductor V2) does not exist, the control value is calculated as if this VLR exists and is reflected in the change in the duty ratio of the pulse drive signal. Thus, even using a relatively small capacitance element as the inductor 4 mounted on the smoothing circuit 3 can compensate the resulting decrease in the damping capacity at the virtual inductance B9.

The control system of the switching power supply device 1 includes a virtual capacitance B10 for achieving the virtual capacitance VCR illustrated in FIG. 1. The virtual capacitance B10 includes a filter B5 and a subtractor B8. Since the control system of the switching power supply device 1 provides such a virtual capacitance B10, even though the virtual capacitance VCR (derived from the virtual condenser V3, the virtual ESRV4, and the virtual dummy resistor V5) does not exist, the control value is calculated as if this VCR exists and is reflected in the change in the duty ratio of the pulse drive signal. Thus, even using a relatively small capacitance element as the condenser 5 mounted on the smoothing circuit 3 can compensate the resulting decrease in the damping capacity at the virtual capacitance B10.

According to the switching power supply device 1 of the present application example, even adopting a small and low-loss element as an element mounted in the smoothing circuit 3 causes, by calculation in the control device 6, the control value as if the virtual inductance VLR and virtual capacitance VCR exist within the smoothing circuit 3 to be calculated, and this calculated control value is reflected in the change of the duty ratio of the pulse drive signal in the switching circuit 2. Thus, even adopting a small and low-loss element for the inductor 4 or condenser 5 constituting the smoothing circuit 3 in order to achieve miniaturization and high efficiency of the switching power supply device 1, the waveform of the output voltage eo can be prevented from oscillating during load fluctuation. Accordingly, the high-frequency oscillation superimposed on the output voltage waveform can be prevented.

The present application example illustrates the configuration in which the virtual inductance B9 and the virtual capacitance B10 are provided in the control system to implement the virtual inductance VLR and the virtual capacitance VCR in the smoothing circuit 3, but the switching power supply device 1 is not limited to this configuration. The switching power supply device 1 may, for example, omit the virtual inductance B9 from the control system, and without implementing the virtual inductance VLR in the smoothing circuit 3, may implement only the virtual capacitance VCR.

Embodiments

Embodiments will be described below. The following embodiment is an aspect of the present application and does not limit the technical scope of the present application.

The circuit configuration of the switching power supply device according to the present embodiment, will be described with reference to FIG. 1 used in the description of the above application example. The switching power supply device 1 according to the present embodiment is a converter provided with the switching circuit 2, the smoothing circuit 3, and the control device 6, as described in the above application example, and converts the voltage of the input power of the switching power supply device 1, and outputs the converted voltage. The switching circuit 2 transforms the input power by switching according to the pulse drive signal generated by the control device 6. The smoothing circuit 3 is a circuit in which a series inductor 4 and a parallel condenser 5 are arranged on the output side of the switching circuit 2. By smoothing the output current of the switching circuit 2 by the inductor 4 and the condenser 5, the harmonic components, or the like included in the output current of the switching circuit 2 are removed. In the switching power supply device according to the present embodiment, the virtual resistor V1, virtual inductor V2, virtual condenser V3, virtual ESRV4, and virtual dummy resistor V5 are virtually implemented, as described in the application example.

Next, the control system of the switching power supply device 1 according to the present embodiment will be described with reference to FIG. 2 used to describe the above application example. In the switching power supply device 1 according to the present embodiment, the control device 6 generates a pulse drive signal of the switching circuit 2 so that the output voltage eo of the switching power supply device 1 becomes a predetermined output target voltage eoref. That is, the control device 6 calculates, by a subtractor B7, the difference between the output voltage eo obtained by the voltmeter detecting the voltage between the output terminals of the switching power supply device 1 and the predetermined output target voltage eoref. Then, the control device 6 processes the difference calculated by the subtractor B7 by a voltage compensator B2 and corrects the difference. This corrected difference is used to generate the pulse drive signal of the switching circuit 2, thereby achieving the basic control system that sets the output voltage eo of the switching power supply device 1 to the predetermined output target voltage eoref.

The control system of the switching power supply device 1 according to the present embodiment, achieves the current mode control by using the output current io obtained by the ammeter detecting the current flowing through the smoothing circuit 3. Specifically, the difference between the difference output from the voltage compensator B2 and the output current io is calculated by the subtractor B8. Then, the control device 6 processes the difference calculated by the subtractor B8 by a current compensator B3 and corrects the difference. This corrected difference is used as a control value for changing the duty ratio of the pulse drive signal, thereby achieving the current mode control using the output current io. This can achieve a control system with excellent line regulation and easy phase compensation. As the current used for the current mode control, the output current io of the switching power supply device 1 is exemplified here, but the current of the inductor 4 may be used instead of the output current of the switching power supply device 1.

The control system of the switching power supply device 1 according to the present embodiment is provided with the virtual inductance B9 for achieving the virtual inductance VLR illustrated in FIG. 1, as described in the application example. The virtual inductance B9 includes the filter B4 and the subtractor B6. The filter B4 corrects the output current io. The filter B4 implements the virtual inductance VLR connected in series to the output of the switching circuit 2, and is thereby represented by the following Equation 1, when the virtual impedance of the virtual inductance VLR is defined as Zvl, the virtual inductor V2 of the virtual inductance VLR is defined as inductance LV and ESRrvl, and the virtual resistor V1 of the virtual inductance VLR is defined as Rdp. In the following Equation 1, fvl is a filter for reducing the gain in the high frequency range, and Rdp is a voltage drop.

[Equation 1]

$$Z_{vl} = \frac{s \cdot L_v + r_{vl}}{f_{vl}} + R_{dp}$$

The subtractor B6 calculates the difference between the output target voltage eoref and the output of the filter B4 and generates correction information edrp. To facilitate understanding, the subtractor B7 is described above to calculate the difference between the output voltage eo and the predetermined output target voltage eoref. More precisely, the subtractor B7 calculates the difference between the output voltage eo and the correction information edrp. Then, the difference calculated by the subtractor B7 is input to the voltage compensator B2. Since the control system of the switching power supply device 1 provides such a virtual inductance B9, even though the virtual inductance VLR (derived from the virtual resistor V1 and the virtual inductor V2) does not exist, the control value is calculated as if this VLR exists and is reflected in the change in the duty ratio of the pulse drive signal. Thus, even using a relatively small capacitance element as the inductor 4 mounted on the smoothing circuit 3 can compensate the resulting decrease in the damping capacity at the virtual inductance B9.

The control system of the switching power supply device 1 according to the present embodiment is provided with the virtual capacitance B10 to achieve the virtual capacitance VCR illustrated in FIG. 1, as also described in the application example. The virtual capacitance B10 includes the filter B5 and the subtractor B8. The filter B5 corrects the output voltage eo. The filter B5 implements the virtual capacitance VCR connected in parallel to the output of the switching circuit 2, and is thereby represented by the following Equation 2, when the virtual admittance of the virtual capacitance VCR is defined as Yvc, the virtual condenser V3 of the virtual capacitance VCR is defined as capacitance Cv, the virtual ESRV4 of the virtual capacitance VCR is defined as rvc, and the virtual dummy resistor V5 of the virtual capacitance VCR is defined as Rdm. In Equation 2 below, fvc is a filter for reducing the gain in the high frequency range, and Rdm improves the damping factor.

[Equation 2]

$$Y_{vc} = \frac{C_v \cdot s}{(C_v \cdot r_{vc} \cdot s + 1) \cdot f_{vc}} + \frac{1}{R_{dm}}$$

The subtractor B8 calculates the difference obtained by subtracting the output current io and the output of the filter B5 from the output of the voltage compensator B2. Then, the difference calculated by the subtractor B8 is input to the current compensator B3. Since the control system of the switching power supply device 1 provides such a virtual capacitance B10, even though the virtual capacitance VCR (derived from the virtual condenser V3, the virtual ESRV4, and the virtual dummy resistor V5) does not exist, the control value is calculated as if this VCR exists and is reflected in the change in the duty ratio of the pulse drive signal. Thus, even using a relatively small capacitance element as the condenser 5 mounted on the smoothing circuit 3 can compensate the resulting decrease in the damping capacity at the virtual capacitance B10.

According to the switching power supply device 1 of the present embodiment, even adopting a small and low-loss element as an element mounted in the smoothing circuit 3 causes, by calculation in the control device 6, the control value as if the virtual inductance VLR and virtual capacitance VCR exist within the smoothing circuit 3 to be calculated, and this calculated control value is reflected in the change of the duty ratio of the pulse drive signal in the switching circuit 2. Thus, even adopting a small and low-loss element for the inductor 4 or condenser 5 constituting the smoothing circuit 3 in order to achieve miniaturization and high efficiency of the switching power supply device 1, the waveform of the output voltage eo does not tend to become oscillatory during load fluctuation. Accordingly, the high-frequency oscillation superimposed on the output voltage waveform can be reduced.

The switching power supply device 1 according to the present embodiment may, for example, omit the virtual inductance B9 from the control system, and without implementing the virtual inductance VLR in the smoothing circuit 3, may implement only the virtual capacitance VCR, as described in the application example.

Example 1

An example in which the virtual capacitance VCR in the above embodiment is applied to the voltage control of a three-phase inverter will be described below.

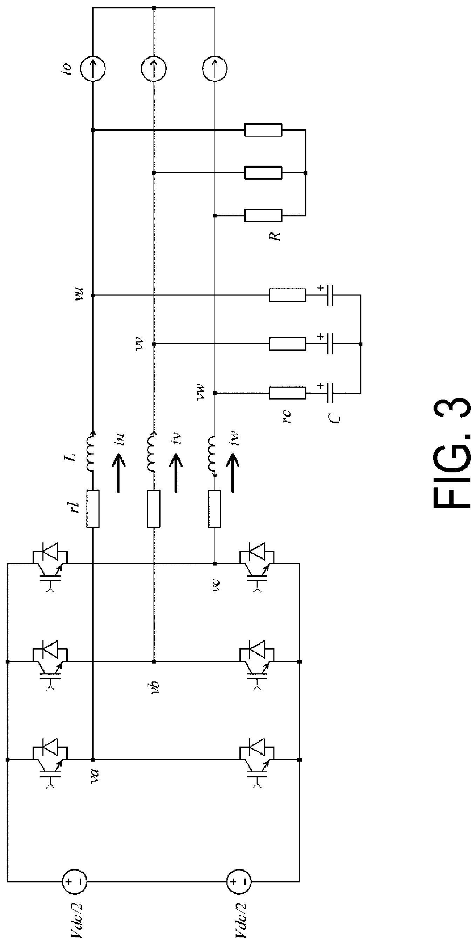

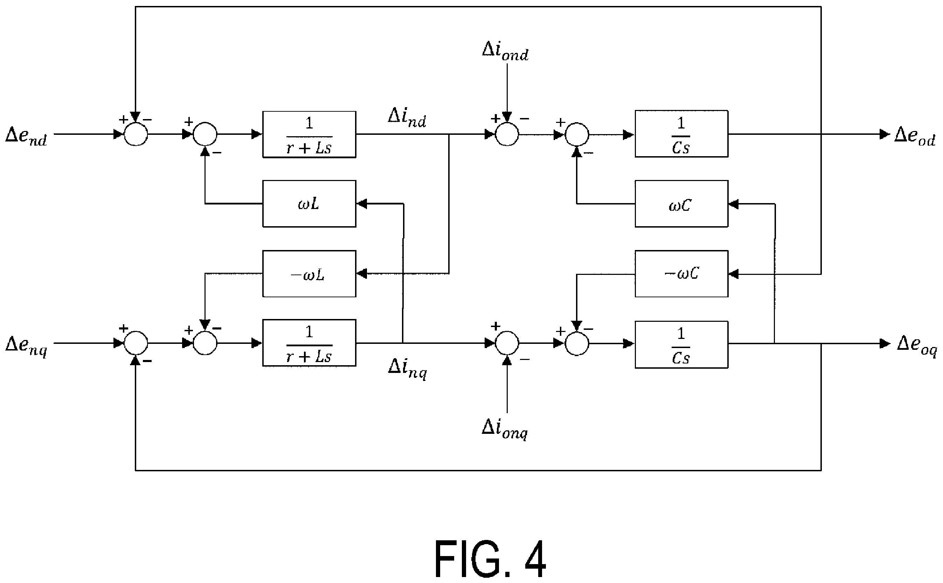

FIG. 3 is a circuit configuration diagram of a three-phase inverter. The application of the above embodiment to the three-phase inverter illustrated in FIG. 3 will be examined below. As illustrated in FIG. 3, the three-phase inverter includes a switching circuit including a total of six switches for switching in phases U, V, and W, and a smoothing circuit provided in each phase. The resistance R is a load. FIG. 4 illustrates a general plant model after dq conversion in the three-phase inverter. As illustrated in FIG. 4, the general plant model after dq conversion in a three-phase inverter is a voltage mode control, and the above embodiment cannot be applied to this plant model. Thus, in order to apply the above embodiment to a three-phase inverter, the current mode control of the three-phase inverter is examined below.

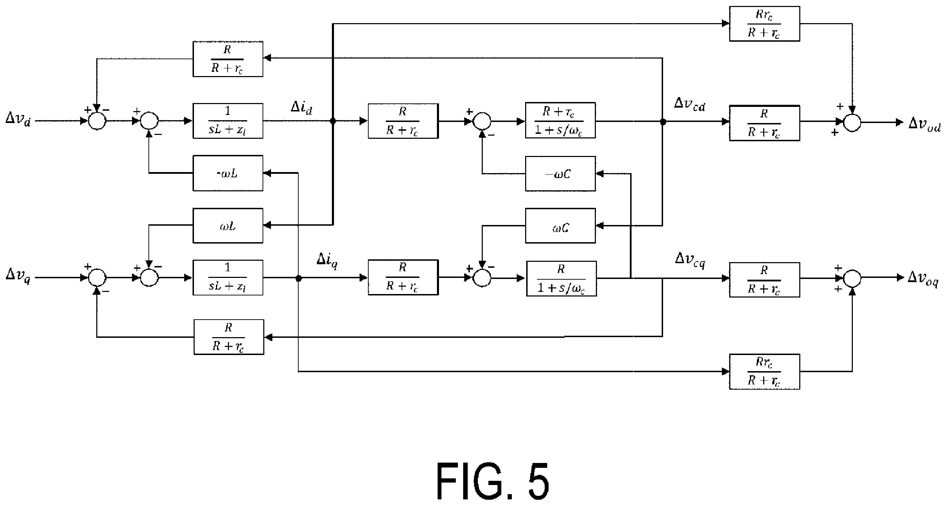

FIG. 5 illustrates a plant model when a load is applied to the three-phase inverter. The plant model illustrated in FIG. 5 is expressed by using the concept of a motor. The plant model illustrated in FIG. 5 is not suitable for the current mode control model and is changed into a form suitable for the current mode control model. In the plant model illustrated in FIG. 5, the state equation with Vcd, Vcq, id and iq as state variables is expressed by Equation 3 below.

[Equation 3]

$$\left(\frac{d}{dt}\right)\cdot\begin{bmatrix}i_d\\i_q\\v_{cd}\\v_{cq}\end{bmatrix}=\begin{bmatrix}-\frac{1}{L}\cdot\left(r_l+\frac{R\cdot r_c}{R+r_c}\right) & \omega & -\frac{R}{L\cdot(R+r_c)} & 0\\-\omega & -\left(r_l+\frac{R\cdot r_c}{R+r_c}\right) & 0 & -\frac{R}{L\cdot(R+r_c)}\\\frac{R}{C\cdot(R+r_c)} & 0 & -\frac{1}{C\cdot(R+r_c)} & \omega\\0 & \frac{R}{C\cdot(R+r_c)} & -\omega & -\frac{1}{C\cdot(R+r_c)}\end{bmatrix}\cdot\begin{bmatrix}i_d\\i_q\\v_{cd}\\v_{cq}\end{bmatrix}$$

$$+\frac{1}{L}\cdot\begin{bmatrix}v_d\\v_q\\0\\0\end{bmatrix}+\begin{bmatrix}\frac{1}{L}\cdot\frac{R\cdot r_c}{R+r_c} & 0\\0 & \frac{1}{L}\cdot\frac{R\cdot r_c}{R+r_c}\\-\frac{R}{C\cdot(R+r_c)} & 0\\0 & -\frac{R}{C\cdot(R+r_c)}\end{bmatrix}\cdot\begin{bmatrix}i_{od}\\i_{oq}\\i_{od}\\i_{oq}\end{bmatrix}$$

In this case, the characteristic equation is a fourth-order function of s, which is difficult to analyze. For Equation 3, the dq axis is decoupled in the same way as for the motor. That is, this Equation 3 is transformed into Equation 4 below.

[Equation 4]

$$\left(\frac{d}{dt}\right)\cdot\begin{bmatrix}i_d\\i_q\\v_{cd}\\v_{cq}\end{bmatrix}=\begin{bmatrix}-\frac{1}{L}\cdot\left(r_l+\frac{R\cdot r_c}{R+r_c}\right) & 0 & -\frac{R}{L\cdot(R+r_c)} & 0\\0 & -\left(r_l+\frac{R\cdot r_c}{R+r_c}\right) & 0 & -\frac{R}{L\cdot(R+r_c)}\\\frac{R}{C\cdot(R+r_c)} & 0 & -\frac{1}{C\cdot(R+r_c)} & 0\\0 & \frac{R}{C\cdot(R+r_c)} & 0 & -\frac{1}{C\cdot(R+r_c)}\end{bmatrix}\cdot\begin{bmatrix}i_d\\i_q\\v_{cd}\\v_{cq}\end{bmatrix}$$

$$+\frac{1}{L}\cdot\begin{bmatrix}v_d\\v_q\\0\\0\end{bmatrix}+\begin{bmatrix}\frac{1}{L}\cdot\frac{R\cdot r_c}{R+r_c} & 0\\0 & \frac{1}{L}\cdot\frac{R\cdot r_c}{R+r_c}\\-\frac{R}{C\cdot(R+r_c)} & 0\\0 & -\frac{R}{C\cdot(R+r_c)}\end{bmatrix}\cdot\begin{bmatrix}i_{od}\\i_{oq}\\i_{od}\\i_{oq}\end{bmatrix}-\begin{bmatrix}0 & -\omega & 0 & 0\\\omega & 0 & 0 & 0\\0 & 0 & 0 & -\omega\\0 & 0 & \omega & 0\end{bmatrix}\cdot\begin{bmatrix}i_d\\i_q\\v_{cd}\\v_{cq}\end{bmatrix}$$

When the third term on the right side of Equation 4 is considered to be a disturbance and canceled by feedforward, the dq axis is decoupled as illustrated in two Equations 5 and 6 below.

[Equation 5]

$$\left(\frac{d}{dt}\right) \cdot \begin{bmatrix} i_d \\ v_{cd} \end{bmatrix} = \begin{bmatrix} -\frac{1}{L} \cdot \left(r_l + \frac{R \cdot r_c}{R + r_c}\right) & -\frac{R}{L \cdot (R + r_c)} \\ \frac{R}{C \cdot (R + r_c)} & -\frac{1}{C \cdot (R + r_c)} \end{bmatrix} \cdot \begin{bmatrix} i_d \\ v_{cd} \end{bmatrix}$$

$$+ \frac{1}{L} \cdot \begin{bmatrix} v_d \\ 0 \end{bmatrix} + \begin{bmatrix} \frac{1}{L} \cdot \frac{R \cdot r_c}{R + r_c} \\ \frac{1}{C} \cdot \frac{R}{R + r_c} \end{bmatrix} \cdot i_{od} - \begin{bmatrix} 0 & -\omega \\ \omega & 0 \end{bmatrix} \cdot \begin{bmatrix} i_q \\ v_{cq} \end{bmatrix}$$

[Equation 6]

$$\left(\frac{d}{dt}\right) \cdot \begin{bmatrix} i_q \\ v_{cq} \end{bmatrix} = \begin{bmatrix} -\frac{1}{L} \cdot \left(r_l + \frac{R \cdot r_c}{R + r_c}\right) & -\frac{R}{L \cdot (R + r_c)} \\ \frac{R}{C \cdot (R + r_c)} & -\frac{1}{C \cdot (R + r_c)} \end{bmatrix} \cdot \begin{bmatrix} i_q \\ v_{cq} \end{bmatrix}$$

$$+ \frac{1}{L} \cdot \begin{bmatrix} v_q \\ 0 \end{bmatrix} + \begin{bmatrix} \frac{1}{L} \cdot \frac{R \cdot r_c}{R + r_c} \\ \frac{1}{C} \cdot \frac{R}{R + r_c} \end{bmatrix} \cdot i_{od} - \begin{bmatrix} 0 & -\omega \\ \omega & 0 \end{bmatrix} \cdot \begin{bmatrix} i_d \\ v_{cd} \end{bmatrix}$$

The output equation is expressed by Equation 7 below.

[Equation 7]

$$v_{od} = \begin{bmatrix} \frac{R \cdot r_c}{R + r_c} & \frac{R}{R + r_c} \end{bmatrix} \cdot \begin{bmatrix} i_d \\ v_{cd} \end{bmatrix} - \frac{R \cdot r_c}{R + r_c} \cdot i_{od}$$

$$v_{oq} = \begin{bmatrix} \frac{R \cdot r_c}{R + r_c} & \frac{R}{R + r_c} \end{bmatrix} \cdot \begin{bmatrix} i_q \\ v_{cq} \end{bmatrix} - \frac{R \cdot r_c}{R + r_c} \cdot i_{oq}$$

When $\alpha$ is a control input, the relationship between input and output is defined in Equation 8 below.

[Equation 8]

$$\begin{bmatrix} v_d \\ v_q \end{bmatrix} = V_{in} \cdot \begin{bmatrix} \alpha_d \\ \alpha_q \end{bmatrix}$$

Each of the third terms on the right side of Equations 5 and 6 is a term that is canceled by feedforward and is considered to be a disturbance. Except for this disturbance term, the state equation is the same as that of the step-down converter. When the small signal model of the d-axis is derived from Equations 5 and 7, Equations 9 and 10 are obtained.

[Equation 9]

$$\Delta v_{od} = G_{\alpha vo} \cdot \Delta \alpha_d + G_{vivo} \cdot \Delta V_{in} - G_{Rvo} \cdot \Delta R - \left( W_{vi} \cdot \Delta i_q + W_{vv} \cdot \Delta v_{oq} \right) - Z_o \cdot \Delta i_{od}$$

[Equation 10]

$$\Delta i_d = G_{\alpha i} \cdot \Delta \alpha_d + G_{vii} \cdot \Delta V_{in} + G_{Ri} \cdot \Delta R + G_{ioi} \cdot \Delta i_{od} - \left( W_{ii} \cdot \Delta i_q + W_{iv} \cdot \Delta v_{oq} \right)$$

However, the coefficients in the above equations are as follows.

[Equation 11]

$$G_{\alpha vo} = \frac{V_{in}}{P_R} \cdot \left( \frac{s}{2 \cdot \pi \cdot f_{rc}} + 1 \right) \qquad G_{vivo} = \frac{\alpha_d}{P_R} \cdot \left( \frac{s}{2 \cdot \pi \cdot f_{rc}} + 1 \right)$$

$$G_{Rvo} = \frac{\alpha_d \cdot V_{in} \cdot L \cdot s \cdot \left( \frac{s}{2 \cdot \pi \cdot f_{rc}} + 1 \right)}{P_R \cdot R^2} \qquad Z_o = \frac{r_l \cdot \left( \frac{s}{2\,\pi \cdot f_{rl}} + 1 \right)}{P_R}$$

$$G_{\alpha i} = \frac{V_{in}}{P_R \cdot R} \cdot \left( \frac{s}{2 \cdot \pi \cdot f_o} + 1 \right) \qquad G_{vii} = \frac{\alpha_d}{P_R \cdot R} \cdot \left( \frac{s}{2 \cdot \pi \cdot f_o} + 1 \right)$$

$$G_{Ri} = -\frac{\alpha_d \cdot V_{in}}{R^2} \cdot \left( \frac{s}{2 \cdot \pi \cdot f_{rc}} + 1 \right) \qquad G_{ioi} = \frac{\frac{s}{2 \cdot \pi \cdot f_{rc}} + 1}{P_R}$$

$$W_{vi} = 0 \quad W_{vv} = -\omega \cdot L \quad W_{ii} = -\omega \cdot C \quad W_{iv} = \frac{\omega \cdot L}{R} \cdot \left( \frac{s}{2 \cdot \pi \cdot f_o} + 1 \right)$$

$$f_{rc} = \frac{1}{2 \cdot \pi \cdot C \cdot r_c} \quad f_o = \frac{1}{2 \cdot \pi \cdot C \cdot R} \quad f_{rl} = \frac{r_l}{2 \cdot \pi \cdot L}$$

$$P_R = \left( \frac{s}{\omega_n} \right)^2 + 2 \cdot \delta \cdot \left( \frac{s}{\omega_n} \right) + 1 \quad \omega_n = \sqrt{\frac{\psi}{C \cdot L} \cdot \left( 1 + \frac{r_l}{R} \right)}$$

$$\delta = \frac{(r_c \cdot \psi + r_l) \cdot \sqrt{\frac{C}{L}} + \frac{\psi}{R} \cdot \sqrt{\frac{L}{C}}}{2 \cdot \sqrt{\left( 1 + \frac{r_l}{R} \right)} \cdot \psi} \qquad \psi = \frac{R}{R + r_c}$$

Similarly, when the small signal model of the q axis is derived, the following Equations 12 and 13 are obtained.

[Equation 12]

$$\Delta v_{oq} = G_{\alpha vo} \cdot \Delta \alpha_d + G_{vivo} \cdot \Delta V_{in} - G_{Rvo} \cdot \Delta R - \left( W_{vi} \cdot \Delta i_d + W_{vv} \cdot \Delta v_{od} \right)$$

[Equation 13]

$$\Delta i_q = G_{\alpha i} \cdot \Delta \alpha_d + G_{vii} \cdot \Delta V_{in} + G_{Ri} \cdot \Delta R - \left( W_{ii} \cdot \Delta i_d + W_{iv} \cdot \Delta v_{od} \right)$$

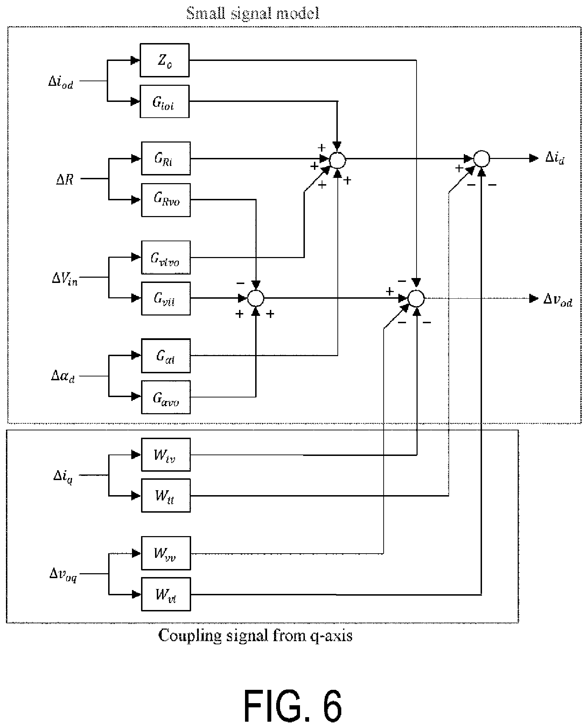

As can be seen by comparing Equation 9 and Equation 10 with Equation 12 and Equation 13, if the subscripts d and q are replaced, both equation pairs are the same, and the configuration of the control system is naturally the same. Thus, a small signal model of a three-phase inverter focusing only on the d-axis will be illustrated below. FIG. 6 illustrates a small signal model of the d-axis in the three-phase inverter.

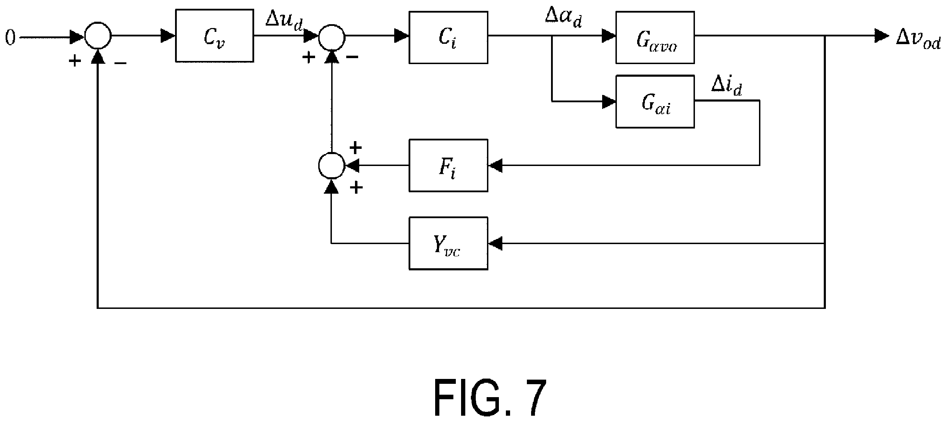

In Example 1, the virtual capacitance B10 that implements the virtual capacitance VCR in the above embodiment,

is applied to the control system of such a model based on the current mode control. FIG. 7 is a block diagram of the control system in which the virtual capacitance B10 in the embodiment is applied to the basic configuration of the current mode control. The basic configuration is the same as that in FIG. 2, but a current averaging filter Fi is provided in Example 1 because the average current mode control is used in accordance with the actual system. This improves the resistance to the noise of the detected current. In FIG. 7, Cv corresponds to the voltage compensator B2 in the above embodiment, Ci corresponds to the current compensator B3 in the above embodiment, and Yvc corresponds to the filter B5 in the above embodiment. The current averaging filter Fi is represented by Equation 14 below, Ci is represented by Equation 15 below, and Cv is represented by Equation 16 below.

[Equation 14]

$$F_i = \frac{1}{\dfrac{s}{2\,\pi \cdot f_{ave}} + 1}$$

[Equation 15]

$$C_i = \frac{1}{V_{dc}} \cdot \frac{\dfrac{s}{2 \cdot \pi \cdot f_{lead}} + 1}{\dfrac{s}{2 \cdot \pi \cdot f_{lag}} + 1} \cdot \exp\left(-\frac{s}{f_{sw}}\right)$$

[Equation 16]

$$C_v = \frac{K_{pi} \cdot T_{pi} \cdot s + 1}{T_{pi} \cdot s}$$

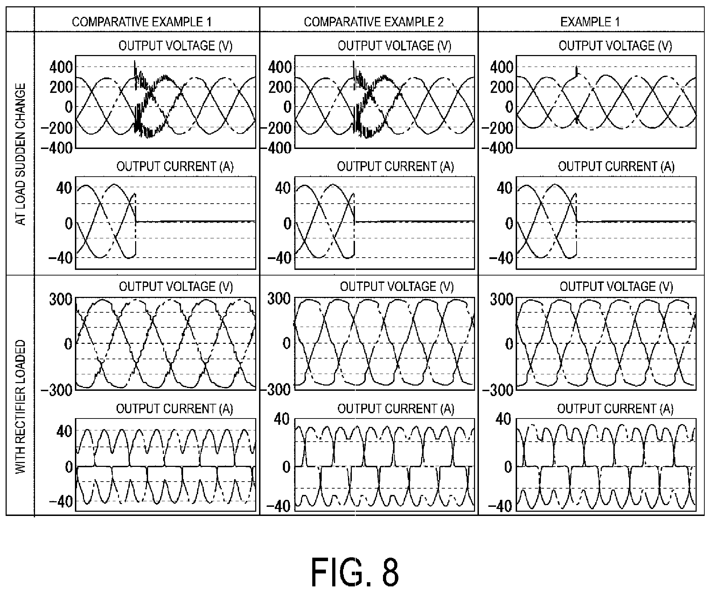

FIG. 8 illustrates the verification results of the three-phase inverter. In this verification, in addition to Example 1, in which the current mode control is combined with the virtual capacitance VCR, as a control method of the three-phase inverter, Comparative Example 1 of the voltage mode control and Comparative Example 2 of the current mode control were prepared as comparative examples. Then, simulations were performed on the behavior of the three-phase inverter when the resistance load is suddenly changed from 100% to 1% and when the rectifier is loaded. The specification of the three-phase inverter is 200 Vac/10 kVA (rated load resistance Rrate: 4.08 $\Omega$), and the circuit parameters of each symbol, or the like, illustrated in FIG. 3 are as follows.

Input voltage: 400 V
Output line voltage: 200 Vrms
Switching frequency fsw: 20 kHz
Reference frequency f: 50 Hz
L = 250 ($\mu$H)
rl = 50 (m$\Omega$)
C = 36 ($\mu$F) (star connection)
rc = 10 (m$\Omega$)
Sampling frequency: 40 kHz

As can be seen from the comparison of the waveforms in FIG. 8, it can be seen that Example 1 is more stable than Comparative Examples 1 and 2 because the vibration is quickly attenuated when the load changes suddenly. It can be seen that the output is stable even when the rectifier is loaded. Thus, the results of the present verification show that applying the above embodiment to a three-phase inverter, even adopting a small and low-loss element as an element constituting the smoothing circuit, can stabilize the output voltage compared to the case of the general voltage mode control or the current mode control. Accordingly, Example 1, when used for the electric facilities in the premises of the customer, can continue to supply the electric power to the premises at a stable voltage even upon sudden change of the electric load in the premises in the case of independent operation in which the external power supply is lost due to a power system down or the like and the electric power is supplied to the premises by a storage battery or the like.

Example 2

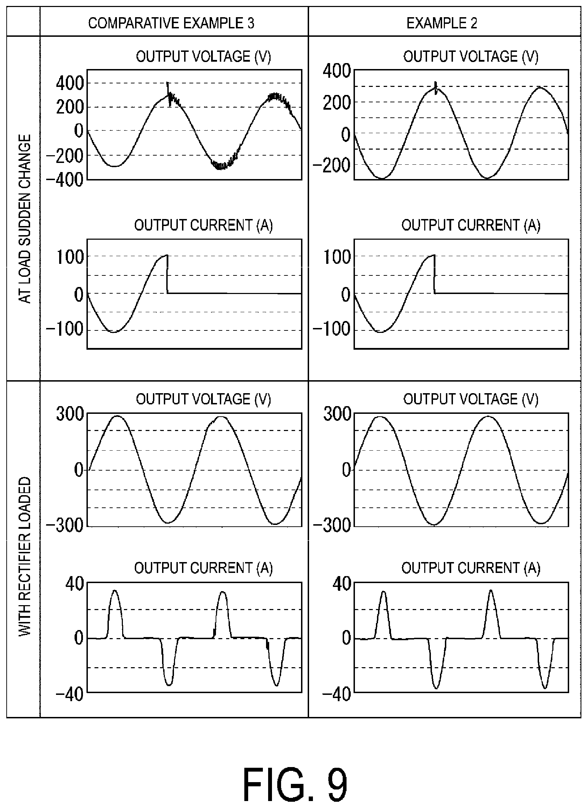

FIG. 9 is a diagram illustrating the verification results for a single-phase inverter. The above embodiment is applicable not only to the three-phase inverter illustrated as Example 1, but also to a single-phase inverter, for example. Although details such as the examination of the plant model and the conditions of the simulation are omitted, in this verification, simulation was performed with Example 2 in which the virtual capacitance VCR according to the above embodiment was applied to the voltage control of the single-phase inverter and with Comparative Example 3 under normal current mode control of the single-phase inverter, to which the above embodiment was not applied.

As can be seen from the comparison of the waveforms in FIG. 9, Example 2 shows that the vibration is quickly attenuated when the load suddenly changes and that the output is stable compared to Comparative Example 3. It can be seen that the output is stable even when the rectifier is loaded. Thus, the results of the present verification show that applying the above embodiment to the single-phase inverter can stabilize the output voltage as in Example 1 above. Accordingly, Example 2 similar to Example 1 can continue supplying the electric power in the premises at a stable voltage even upon sudden change of the electric load in the premises in independent operation when the external power supply is lost due to a power system down or the like and the electric power is supplied to the premises by a storage battery or the like.

Other Modifications

In addition to the three-phase inverter of Example 1 and the single-phase inverter of Example 2, the above embodiment can be applied to a wide variety of power supply devices such as DC-DC converters incorporated in various electronic devices and inverters controlling various drive sources.

In addition, the above embodiment can be modified as appropriate without changing the gist disclosed in the present application. For example, although the circuit configuration of a step-down converter including the smoothing circuit 3 in which a series inductor 4 and a parallel condenser 5 are arranged on the output side of the switching circuit 2 has been exemplified above, the above embodiment may be modified to, for example, a step-up converter including a smoothing circuit in which a parallel inductor and a parallel condenser are arranged on the output side of the switching circuit, or a step-up converter including a smoothing circuit in which an inductor is arranged on the power supply side from the switching element of the switching circuit and a condenser is arranged in parallel on the output side of the switching circuit.

The present application includes the following additional matter.

Supplementary Note 1

A switching power supply device including:

a switching circuit (2) configured to transform an input power by switching according to a pulse drive signal;
a smoothing circuit (3) in which a condenser in parallel is disposed at least on an output side of the switching circuit; and
a control device (6) configured to generate a pulse drive signal so that the output voltage of the smoothing circuit is a predetermined output target voltage, wherein
the control device includes
a voltage compensator (B2) configured to generate a control value for reducing a difference between the output voltage and the output target voltage and thus changing a duty ratio of the pulse drive signal,
a current compensator (B3) configured to correct the control value based on a detected current at a predetermined section of the smoothing circuit, and
a virtual capacitance (B10) configured to calculate, from the output voltage, a current correction amount based on virtual capacitance generated by a virtual parallel element parallel to the condenser and correct the control value to be input to the current compensator.

## EP 4 611 245 A1

Reference Signs

| | |
|---|---|
| 1 | Switching power supply device |
| 2 | Switching circuit |
| 3 | Smoothing circuit |
| 4 | Inductor |
| 5 | Condenser |
| 6 | Control device |
| B1 | Control object |
| B2 | Voltage compensator |
| B3 | Current compensator |
| B4 | Filter |
| B5 | Filter |
| B6 | Subtractor |
| B7 | Subtractor |
| B8 | Subtractor |
| B9 | Virtual inductance |
| B10 | Virtual capacitance |
| V1 | Virtual resistor |
| V2 | Virtual inductor |
| V3 | Virtual condenser |
| V4 | Virtual ESR |
| V5 | Virtual dummy resistor |
| RP | Real component |
| VLR | Virtual inductance |
| VCR | Virtual capacitance |

**Claims**

1. A switching power supply device, comprising:

   a switching circuit configured to transform an input power by switching according to a pulse drive signal;
   a smoothing circuit in which a condenser in parallel is disposed at least on an output side of the switching circuit; and
   a control device configured to generate a pulse drive signal so that an output voltage of the smoothing circuit is a predetermined output target voltage, wherein
   the control device comprises
   a voltage compensator configured to generate a control value for reducing a difference between the output voltage and the output target voltage and thus changing a duty ratio of the pulse drive signal,
   a current compensator configured to correct the control value based on a detected current at a predetermined section of the smoothing circuit, and
   a virtual capacitance configured to calculate, from the output voltage, a current correction amount based on virtual capacitance generated by a virtual parallel element parallel to the condenser and correct the control value to be input to the current compensator.

2. The switching power supply device according to claim 1, wherein the virtual parallel element comprises a virtual condenser and a virtual resistor that are parallel to the condenser.

3. The switching power supply device according to claim 1 or 2, wherein a virtual admittance to be used for correcting the control value by the virtual capacitance comprises a filter configured to reduce a gain in a high frequency range.

4. The switching power supply device according to claim 1, wherein

   the smoothing circuit comprises an inductor connected to the switching circuit,
   the control device further comprises a virtual inductance configured to calculate, from the detected current, a voltage correction amount based on a virtual inductance generated by a virtual series element in series with the

13

inductor and correct the output target voltage to be input to the voltage compensator.

5. The switching power supply device according to claim 4, wherein the virtual series element comprises a virtual inductor and a virtual resistor that are in series with the inductor.

6. The switching power supply device according to claim 4 or 5, wherein the virtual impedance used for correcting the control value by the virtual inductance comprises a filter configured to reduce a gain in a high frequency range.

7. The switching power supply device according to claim 1, wherein the current compensator corrects the control value based on the detected current averaged by a filter configured to average the current.

8. The switching power supply device according to claim 1, wherein the switching circuit and the smoothing circuit form a single-phase or three-phase inverter circuit.

9. A control device for a switching power supply device comprising a switching circuit configured to transform an input power by switching according to a pulse drive signal and a smoothing circuit in which a condenser in parallel is disposed at least on an output side of the switching circuit, wherein

the control device comprises a controller configured to generate a pulse drive signal so that the output voltage of the smoothing circuit is a predetermined output target voltage,
the controller comprises
a voltage compensator configured to generate a control value for reducing a difference between the output voltage and the output target voltage and thus changing a duty ratio of the pulse drive signal,
a current compensator configured to correct the control value based on a detected current at a predetermined section of the smoothing circuit, and
a virtual capacitance configured to calculate, from the output voltage, a current correction amount based on virtual capacitance generated by a virtual parallel element parallel to the condenser and correct the control value to be input to the current compensator.

FIG. 1

FIG. 2

FIG. 3

FIG. 4

FIG. 5

Small signal model

Coupling signal from q-axis

# FIG. 6

FIG. 7

FIG. 8

EP 4 611 245 A1

FIG. 9

## INTERNATIONAL SEARCH REPORT

| International application No. |
| --- |
| **PCT/JP2023/042651** |

| A. | CLASSIFICATION OF SUBJECT MATTER |
| --- | --- |

*H02M 7/48*(2007.01)i; *H02M 1/12*(2006.01)i
FI:  H02M7/48 M; H02M1/12

According to International Patent Classification (IPC) or to both national classification and IPC

| B. | FIELDS SEARCHED |
| --- | --- |

Minimum documentation searched (classification system followed by classification symbols)

H02M7/48; H02M1/12; H02M3/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | JP 2022-091189 A (KABUSHIKI KAISHA MEIDENSHA) 21 June 2022 (2022-06-21)<br>entire text, all drawings | 1-9 |
| A | JP 2017-200419 A (LSIS CO., LTD.) 02 November 2017 (2017-11-02)<br>entire text, all drawings | 1-9 |
| A | JP 2007-008191 A (HONDA MOTOR CO., LTD.) 18 January 2007 (2007-01-18)<br>entire text, all drawings | 1-9 |
| A | JP 2002-233159 A (FUJI ELECTRIC CO., LTD.) 16 August 2002 (2002-08-16)<br>entire text, all drawings | 1-9 |
| A | CN 113067372 A (CHANGZHOU TIANMAN INTELLIGENT TECH CO., LTD.) 02 July 2021 (2021-07-02)<br>entire text, all drawings | 1-9 |
| A | CN 112865521 A (ZHEJIANG UNIVERSITY) 28 May 2021 (2021-05-28)<br>entire text, all drawings | 1-9 |

☐ Further documents are listed in the continuation of Box C.　　☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **05 February 2024** | **20 February 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

INTERNATIONAL SEARCH REPORT
Information on patent family members

| | International application No. |
|---|---|
| | **PCT/JP2023/042651** |

| Patent document cited in search report | | | Publication date (day/month/year) | Patent family member(s) | Publication date (day/month/year) |
|---|---|---|---|---|---|
| JP | 2022-091189 | A | 21 June 2022 | (Family: none) | |
| JP | 2017-200419 | A | 02 November 2017 | US 2017/0317606 A1 entire text, all drawings KR 10-2017-0123010 A CN 107342590 A | |
| JP | 2007-008191 | A | 18 January 2007 | (Family: none) | |
| JP | 2002-233159 | A | 16 August 2002 | (Family: none) | |
| CN | 113067372 | A | 02 July 2021 | (Family: none) | |
| CN | 112865521 | A | 28 May 2021 | (Family: none) | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011254645 A
- JP 2017200419 A

- JP 2022091189 A

**Non-patent literature cited in the description**

- A Method to Design a Damping Control System for a Field Oriented Controlled Induction Motor Traction System for DC Electric Railway Vehicles. **MASASHI YOKOO** ; **KEIICHIRO KONDO**. IEEJ Transactions on Electrical and Electronic Engineering. The Institute of Electrical Engineers of Japan, 01 June 2015, vol. 135, 622-631